# EUROPEAN PATENT SPECIFICATION

(11) **EP 0 458 446 B1**
(45) Date of publication and mention of the grant of the patent: **14.06.1995**
(21) Application number: 91302333.9
(22) Date of filing: 19.03.1991
(51) Int. Cl.: B60B 33/02

(54) **Braked castor**
Gebremste Lenkrolle
Roulette freinée

(30) Priority: 18.05.1990 GB 9011223
(43) Date of publication of application: 27.11.1991
(73) Proprietor: GUY-RAYMOND ENGINEERING COMPANY LIMITED, King's Lynn Norfolk PE30 4LX (GB)
(72) Inventor: Daniels, Raymond Robert James, King's Lynn, Norfolk PE30 0RA (GB)
(74) Representative: Abbie, Andrew Kenneth

(56) References cited:
- WO-A-81/02273
- DE-A- 2 927 549
- DE-U- 8 914 194
- GB-A- 2 025 220
- GB-A- 2 195 237

## Description

This invention relates to castors for use on furniture and in particular on office chairs.

In some countries regulations require that a castor when fitted to a chair be braked unless the chair is subjected to a predetermined downward load as would be applied when a person is seated in the chair.

Known castors such as those disclosed in GB-A-2 025 220 or GB-A-2 195 237 meeting this requirement comprise a loaded biasing means biasing a brake means of the castor into engagement with wheel means of the castor in the absence of a downward load above a predetermined amount being applied to the castor. However, assembly of such known castors is complex, involving preloading the biasing means prior to mounting of the wheel means and any spindle thereof and maintaining the preloading of the biasing means during such mounting, and is not susceptible to automation.

An object of the present invention is to provide such a castor which avoids the need for such preloading.

The castors disclosed in GB-A-2 025 220, GB-A-2 195 237 and also the castor disclosed in DE-A-2 927 549 each comprises a castor comprising wheel means rotatably mounted relative to a body by a spindle which is mounted in a through-passage of the body, said through-passage allowing upward and downward movement of the body relative to the spindle, and a biasing means providing a predetermined biasing force biasing said body upwardly relative to the spindle such that a brake means of the body engages said wheel means to brake the latter in the absence of a downward load above a predetermined amount being applied to the body.

DE-A-2 927 549 discloses a castor in which the arrangement is such that mounting of the spindle transversely into the passage by way of an insertion slot would provide a certain amount of loading of the biasing means.

In the castors disclosed in GB-A-2 025 220 and GB-A-2 195 237 the spindle has to be axially inserted into the through-passage. To achieve this it is necessary to preload the biasing means which otherwise would project into the through-passage to block axial insertion of the spindle.

The present invention uses the step of axial insertion of the spindle into the through-passage to load the biasing means and provides a castor comprising wheel means rotatably mounted relative to a body by a spindle which is mounted in a through-passage of a spindle mount of the body, said through-passage allowing upward and downward movement of the body relative to the spindle, and a biasing means providing a predetermined biasing force biasing said body upwardly relative to the spindle such that a brake means of the body engages said wheel means to brake the latter in the absence of a downward load above a predetermined amount being applied to the body, characterised in that the spindle has a tapered end which engages a free end portion of said biasing means projecting into said through-passage during axial insertion of said spindle into said through-passage to effect a loading of said biasing means.

Preferably, the wheel means cooperate with the body such that mounting of the wheel means to the spindle when the spindle is mounted in said passage further loads said biasing means.

Preferably, said passage in which said spindle is mounted is a through-passage of a spindle mount of the body, and said wheel means comprises two wheels rotatably mounted on respective end portions of the spindle to each side of the spindle mount.

The biasing means may advantageously comprise a spring located within a recess in said body and arranged to cause said biasing force to act on a portion of said spindle located within said spindle mount.

The brake means may comprise a respective radially outwardly facing surface means arranged for frictionally engaging a radially inwardly facing circumferential surface of each of said wheels.

The surface means of each of said brake means and said circumferential surface of each of said wheels may be disposed such that when said wheels are being mounted to the respective end portions of the spindle when the spindle is mounted in the through-passage movement of said circumferential surfaces into engagement with said surface means causes said spindle to move upwardly relative to said body to effect loading of said biasing means.

In a preferred embodiment, each of said brake means has a sloping free edge portion adjacent to and axially outward of said surface means thereof and each of said wheels has a sloping free annular edge portion adjacent to and axially inwardly of said circumferential surface thereon such that when said wheels are being mounted to the respective end portions of the spindle when the spindle is mounted in the through-passage said annular edge portions ride radially over said break means edge portions causing said spindle to move upwardly relative to said body to effect loading of said biasing means and said circumferential surfaces engage said surface means. However, it is to be understood that only the free edge portions of the brake means or only the annular edge portions of the wheels need slope.

The invention also includes a method of manufacturing a castor comprising wheel means rotatably mounted relative to a body by a spindle which is mounted in a through-passage of a spindle mount of the body, said through-passage allowing upward and downward movement of the body relative to the spindle, and a biasing means providing a predetermined biasing force biasing said body upwardly relative to the spindle such that a brake means of the body engages said wheel means to brake the latter in the absence of a downward load above a predetermined amount being applied to the body, said method including inserting the biasing means into a recess of the body so as to project in an unloaded condition into said through-passage and thereafter axially inserting said spindle in said through-passage such that when said spindle is mounted in said through-passage said biasing means acts on a portion of said spindle located within the spindle mount and biases the body upwardly relative to said spindle characterised in that in the step of axially inserting said spindle into said through-passage a tapered end of said spindle engages a free end portion of said biasing means projecting into said through-passage to effect a loading of said biasing means.

Preferably, the wheel means are mounted to the spindle when the spindle is mounted in said passage and the step of mounting the wheel means to the spindle loads said biasing means.

The step of mounting the wheel means to the spindle may comprise simultaneously pushing two wheels axially on to respective end portions of the spindle to each side of the spindle mount.

In order that the invention may be better understood, the above-mentioned embodiment thereof, which is given by way of example only, will now be described with reference to the accompanying drawings, in which:
Figures 1 - 3 are respectively side, front and top plan views of a twin wheel castor;
Figure 4 and Figure 5 are cross-sectional views of the castor taken along the line IV-IV in Figure 1 respectively showing the castor in braked and unbraked conditions; and
Figures 6 - 9 illustrate successive steps in the mounting of a spindle and the wheels of the castor.

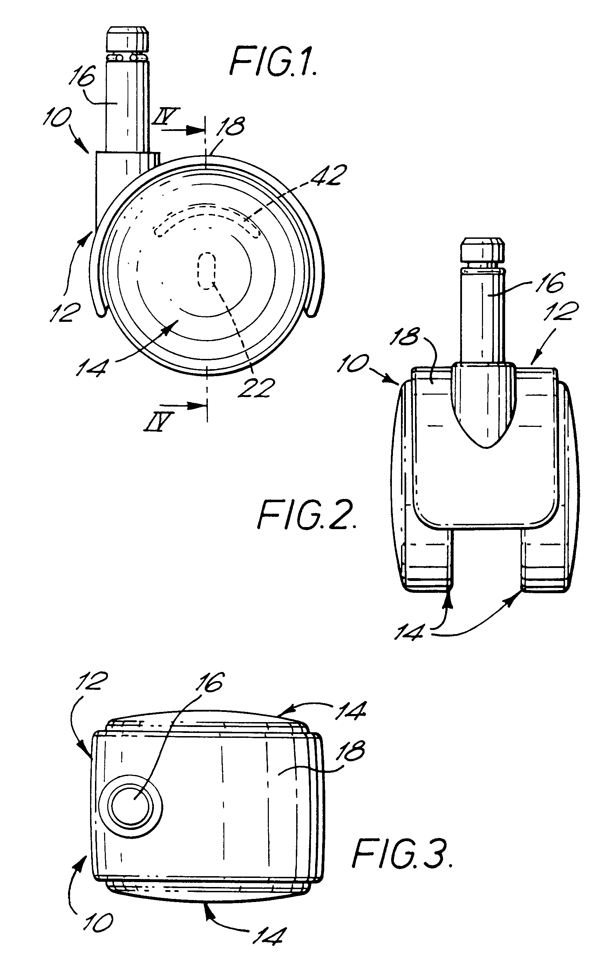

Referring first to Figures 1 - 3, the illustrated castor generally comprises a body member 12, of a plastics material, for example a polyamide, or a metal, two plastics castor wheels 14 mounted to the body and a metal stem 16 extending from and rotatable in the body 12 for mounting the castor on a piece of furniture. The body 12 also includes a hood 18 which extends over the wheels.

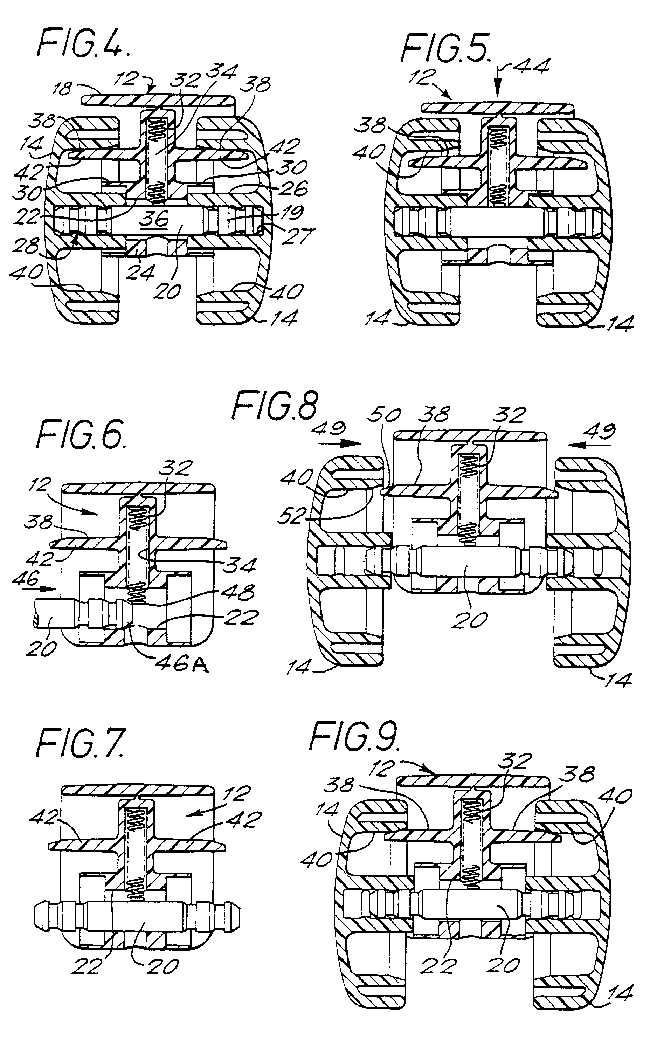

Referring now to Figure 4, the two wheels 14 are rotatably mounted on respective end portions 19 of a spindle 20, which is mounted in a through-bore 22 of a spindle mount 24 of the body 12 so as to extend from the spindle mount on each side thereof. As illustrated, the spindle mount 24 is integral with the body and formed as a boss. Each wheel 14 is provided with a respective central boss 26 provided with a closed bore 27 into which the spindle end portion 19 extends. Each wheel is axially retained on its respective spindle end portion 19, by interengaging groove and rib means 28 of the spindle end portion and closed bore of the boss. As illustrated, these groove and rib means take the form disclosed in our UK Patent 2171897. Specifically, each closed bore is formed with two radially inwardly projecting circumferentially extending annular ribs which are spaced along the bore and which are received in annular grooves in the spindle end portion. Furthermore, the circumferentially extending annular ribs formed in the bore are provided with gaps in their circumferential extents for the reasons disclosed in the above-mentioned UK patent, which reasons include allowing grease deposited in the bore before the spindle is inserted to be spread evenly over the wall of the bore and complementary surfaces of the spindle during insertion of the spindle end portion into the bore.

The cross-section of the through-passage 22 is not circular but is generally oval with parallel sides and arcuate upper and lower ends, as indicated in dotted line in Figure 1, in order to allow the castor body 12 to move substantially vertically relative to the spindle 20 and the wheels 14 thereon. A respective shroud 30 which is also substantially oval in cross-section is formed integrally with the spindle mount 24 to confine small grease seepages from the closed bores 27 of the wheel bosses 16 and additionally to prevent dust, fluff and other debris adhering to such seepages in the manner disclosed in our application GB 8925417.1.

The castor has a loaded biasing means which provides a predetermined biasing force biasing the body 12 upwardly relative to the spindle 20 such that a brake means of the body engages the wheels 14 to brake the latter in the absence of a downward load above a predetermined amount being applied to the body. In the embodiment, the biasing means comprises a spring 32 located within a recess 34 in the body 12 and arranged to cause the biasing force to act on a portion 36 of the spindle 20 which is located within the spindle mount 24. As illustrated the spring 32 acts directly upon the spindle portion 36. Furthermore, in the illustrated embodiment, the brake means comprises a respective radially outwardly facing surface 38 arranged for frictionally engaging a radially inwardly facing circumferential surface 40 of each of the wheels 14. The brake surfaces 38 are provided on respective arcuate body portions 42 extending from a central portion of the castor body in which the recess 34 is located. The arcuate extent of the portions 42 is indicated in dotted line in Figure 1.

Whilst Figure 4 indicates a braked condition of the castor, in which the brake surfaces 38 frictionally engage the wheel surfaces 40 due to the biasing of the body 12 upwardly relative to the spindle 20 by the spring 32, Figure 5 illustrates an unbraked condition of the castor caused by the body 12 being subjected to a downward load, indicated by arrow 44, above a predetermined amount sufficient to overcome the biasing force of the spring 32. It will be noted that in the unbraked condition the brake surfaces 38 are spaced from the wheel surfaces 40. Of course, suitable selection of the spring 32 will determine the predetermined load which must be applied to the body to alter the condition of the castor from its braked condition to its unbraked condition. Thus, the castor can be designed such that it remains in the braked condition when subjected only to the weight of a chair to which it is affixed but is then altered to its unbraked condition when a person is seated in the chair.

Assembly of the castor will now be described with reference to Figures 6 - 9. Firstly, the spring 32 is inserted into the body recess 34 so as to project in its unloaded condition into the through-passage 22 as illustrated in Figure 6. Thereafter the spindle is inserted in the direction of arrow 46 into the through-passage 22 as also illustrated in Figure 6. The spindle has a tapered end 46A, which is shown as bevelled, which engages the free end portion 48 of the spring projecting into the through-passage during such insertion to effect an initial loading of the spring. Thus, when the spindle is properly positioned in the through-passage as illustrated in Figure 7, the spring 34 is somewhat contracted from its unloaded condition and biases the body upwardly relative to the spindle.

Thereafter, the wheels 34 are simultaneously mounted to the end portions 19 of the spindle by being pushed axially thereon as indicated by the arrows 49 in Figure 8. Mounting of the wheels to the spindle end portions in this manner is arranged to further load the spring 32. This is achieved by having the brake surfaces 38 disposed radially outwardly of the wheels surfaces 40 at the commencement of the mounting of the wheels to the spindle as shown in Figure 8 and such that during the further mounting of the wheels to the spindle movement of the surfaces 40 into engagement with the brake surfaces 38 causes the spindle 20 to move upwardly relative to the body 12 to effect further loading of the biasing means. As will be noted, in the illustrated castor, each of the brake portions 42 has a sloping free edge portion 50 adjacent to and axially outwardly of its brake surface 38 and each of the wheels has a sloping free annular edge portion 52 adjacent to and axially inwardly (with respect to the castor) of its circumferential surface 40 such that when the wheels are being mounted to respective end portions of the spindle the annular edge portions 52 ride radially over the brake edge portions 50 (as illustrated in Figure 9) causing the spindle to move upwardly relative to the body and effect further contraction of the spring 32. In the illustrated castor the sloping edge portions 50 and 52 are bevelled. When the wheels 14 are fully mounted on the spindle, they take the position illustrated in Figure 4, in which the brake surfaces 38 are in frictional engagement with the wheel surfaces 40.

From the foregoing, it will be understood that the illustrated castor is susceptible to automatic assembly, since it is assembly of the spindle and thereafter the wheels which effect the loading of the spring.

It is to be understood that the embodiment may be modified such that only one of the edge portions 50 and 52 slopes.

In the illustrated castor, the radially inwardly facing circumferential surface 40 of the wheel which is engaged by the brake surface 38 is formed on an annular flange disposed radially inwardly of the ground-engaging rim of the wheel. However, it is to be understood that this surface may be formed by a radially inwardly facing surface of the rim itself.

## Claims

1. A castor comprising wheel means (14) rotatably mounted relative to a body (12) by a spindle (20) which is mounted in a through-passage (22) of a spindle mount (24) of the body (12), said through-passage allowing upward and downward movement of the body relative to the spindle, and a biasing means (32) providing a predetermined biasing force biasing said body upwardly relative to the spindle such that a brake means (38) of the body (12) engages said wheel means (14) to brake the latter in the absence of a downward load above a predetermined amount being applied to the body, characterised in that the spindle (20) has a tapered end (46A) which engages a free end portion (48) of said biasing means (32) projecting into said through-passage during axial insertion of said spindle (20) into said through-passage (22) to effect a loading of said biasing means (32).

2. A castor as claimed in claim 1, wherein the wheel means (14) cooperate with the body (12) such that mounting of the wheel means (14) to the spindle (20) when the spindle is mounted in said passage (22) further loads said biasing means (32).

3. A castor as claimed in claim 1 or 2, wherein said passage in which said spindle is mounted is a through-passage (22) of a spindle mount (24) of the body (12), and said wheel means comprises two wheels (14) rotatably mounted on respective end portions (19) of the spindle to each side of the spindle mount (24).

4. A castor as claimed in claim 3, wherein said biasing means comprises a spring (32) located within a recess (34) in said body (12) and arranged to cause said biasing force to act on a portion (36) of said spindle (20) located within said spindle mount (24).

5. A castor as claimed in claim 3 or 4, wherein said brake means comprises a respective radially outwardly facing surface means (38) arranged for frictionally engaging a radially inwardly facing circumferential surface (40) of each of said wheels (14).

6. A castor as claimed in claim 5, wherein said surface means (38) of each of said brake means and said circumferential surface (40) of each of said wheels are disposed such that when said wheels are being mounted to the respective end portions (19) of the spindle (20) when the spindle is mounted in the through passage (22) movement of said circumferential surfaces (40) into engagement with said surface means (38) causes said spindle (22) to move upwardly relative to said body (12) to effect loading of said biasing means (32).

7. A castor as claimed in claim 5, wherein each of said brake means has a sloping free edge portion (50) adjacent to an axially outward of said surface means (38) thereof and each of said wheels has a sloping free annular edge portion (52) adjacent to and axially inwardly of said circumferential surface (40) thereon such that when said wheels (14) are being mounted to the respective end portions (19) of the spindle (20) when the spindle is mounted in the through passage (22) said annular edge portions (52) ride radially over said brake means edge portions (50) causing said spindle (20) to move upwardly relative to said body (12) to effect loading of said biasing means (32) and said circumferential surfaces (40) engage said surface means (38).

8. A castor as claimed in claim 5, wherein a free edge portion (50) of each of said brake means adjacent to and axially outwardly of said surface means (38) thereof slopes such that when said wheels (14) are being mounted to the respective end portions (19) of the spindle (20) when the spindle is mounted in the through passage (22) said circumferential surfaces (40) of the wheels ride radially over said edge portions (50) into engagement with said surface means (38) causing said spindle (20) to move upwardly relative to said body (12) to effect loading of said biasing means (32).

9. A castor as claimed in claim 5, wherein a free annular edge portion (52) of each of said wheels (14) adjacent to and axially inwardly of said circumferential surface (40) thereon slopes such that when said wheels (14) are being mounted to the respective end portions (19) of the spindle (20) when the spindle is mounted in the through passage (22) said surface means (38) of said brake means ride radially under said annular edge portions (52) into engagement with said circumferential surfaces (40) causing said spindle (20) to move upwardly relative to said body (12) to effect loading of said biasing means (32).

10. A method of manufacturing a castor comprising wheel means (14) rotatably mounted relative to a body (12) by a spindle (20) which is mounted in a through-passage (22) of a spindle mount (24) of the body (12), said through-passage allowing upward and downward movement of the body relative to the spindle, and a biasing means (32) providing a predetermined biasing force biasing said body upwardly relative to the spindle such that a brake means (38) of the body (12) engages said wheel means (14) to brake the latter in the absence of a downward load above a predetermined amount being applied to the body, said method including inserting the biasing means (32) into a recess (34) of the body so as to project in an unloaded condition into said through-passage (22) and thereafter axially inserting said spindle in said through-passage such that when said spindle is mounted in said through-passage said biasing means (32) acts on a portion of said spindle located within the spindle mount (24) and biases the body upwardly relative to said spindle characterised in that in the step of axially inserting said spindle into said through-passage a tapered end (46A) of said spindle engages a free end portion (48) of said biasing means projecting into said through-passage to effect a loading of said biasing means.

11. A method as claimed in claim 10, wherein the wheel means (14) are mounted to the spindle (20) when the spindle is mounted in said passage (22) and the step of mounting the wheel means to the spindle loads said biasing means (32).

12. A method as claimed in claim 11, wherein said wheel means comprises two wheels (14) and said step of mounting the wheel means to the spindle comprises simultaneously pushing the wheels (14) axially on to respective end portions (19) of the spindle to each side of the spindle mount (24).

13. A method as claimed in claim 12, wherein said brake means comprises a respective radially outwardly facing surface means (38) arranged for frictionally engaging a radially inwardly facing circumferential surface (40) of each of said wheels (14) and said surface means (38) of each of said brake means and said circumferential surface (40) of each of said wheels are disposed such that during said step of pushing the wheels axially on to the respective end portions (19) of the spindle (20) movement of said circumferential surfaces (40) into engagement with said surface means (38) causes said spindle (22) to move upwardly relative to said body (12) to effect said further loading of said biasing means (32).

14. A method as claimed in claim 12, wherein said brake means comprises a respective radially outwardly facing surface means (38) arranged for frictionally engaging a radially inwardly facing circumferential surface (40) of each of said wheels (14), and wherein each of said brake means has a sloping free edge portion (50) adjacent to and axially outward of said surface means (38) thereof and each of said wheels has a sloping free annular edge portion (52) adjacent to and axially inwardly of said circumferential surface (40) thereon such that during said step of pushing the wheels (14) axially on to the respective end portions (19) of the spindle (20) said annular edge portions (52) ride radially over said brake means edge portions (50) causing said spindle (20) to move upwardly relative to said body (12) to effect said further loading of said biasing means (32) and said circumferential surfaces (40) engage said surface means (38).

15. A method as claimed in claim 12, wherein said brake means comprises a respective radially outwardly facing surface means (38) arranged for frictionally engaging a radially inwardly facing circumferential surface (40) of each of said wheels (14) and a free edge portion (50) of each of said brake means adjacent to and axially outwardly of said surface means (38) thereof slopes such that during said step of pushing the wheels (14) axially on to the respective end portions (19) of the spindle (20) said circumferential surfaces (40) of the wheels ride radially over said edge portions (50) into engagement with said surface means (38) causing said spindle (20) to move upwardly relative to said body (12) to effect said further loading of said biasing means (32).

16. A method as claimed in claim 12, wherein said brake means comprises a respective radially outwardly facing surface means (38) arranged for frictionally engaging a radially inwardly facing circumferential surface (40) of each of said wheels (14), and a free annular edge portion (52) of each of said wheels (14) adjacent to and axially inwardly of said circumferential surface (40) thereon slopes such that during said step of pushing the wheels (14) axially on to the respective end portions (19) of the spindle (20) said surface means (38) of said brake means ride radially under said annular edge portions (52) into engagement with said circumferential surfaces (40) causing said spindle (20) to move upwardly relative to said body (12) to effect said further loading of said biasing means (32).

## Patentansprüche

1. Lenkrolle, die aufweist: eine Radeinrichtung (14), die in bezug auf einen Körper (12) durch eine in einer Durchgangsöffnung (22) einer Wellenhalterung (24) des Körpers (12) montierten Welle (20) drehbar montiert ist, wobei die Durchgangsöffnung eine Aufwärts- und Abwärtsbewegung des Körpers in bezug auf die Welle gestattet, und eine Vorbelastungseinrichtung (32), die eine vorbestimmte Vorbelastungskraft vorsieht, die den Körper in bezug auf die Welle nach oben vorbelastet, so daß bei nicht vorhandener abwärtsgerichteter Last oberhalb eines vorbestimmten Betrages, die an den Körper angelegt ist, eine Bremseinrichtung (38) des Körpers (12) mit der Radeinrichtung (14) in Eingriff steht, um letztere zu bremsen,
**dadurch gekennzeichnet, daß**
die Welle (20) ein konische Ende (46A) hat, das während des axialen Einführens der Welle (20) in die Durchgangsöffnung (22) mit einem freien Endabschnitt (48) der Vorbelastungseinrichtung (32), der in die Durchgangsöffnung vorsteht, in Eingriff gelangt, um ein Belasten der Vorbelastungseinrichtung (32) zu bewirken.

2. Lenkrolle nach Anspruch 1, wobei die Radeinrichtung (14) mit dem Körper (12) zusammenwirkt, so daß bei in der Öffnung (22) montierter Welle die Montage der Radeinrichtung (14) an der Welle (20) die Vorbelastungseinrichtung (32) weiter belastet.

3. Lenkrolle nach Anspruch 1 oder 2, wobei die Öffnung, in die die Welle montiert wird, eine Durchgangsöffnung (22) einer Wellenhalterung (24) des Körpers (12) ist und die Radeinrichtung zwei Räder (14) aufweist, die an jeweiligen Endabschnitten (19) der Welle an jeder Seite der Wellenhalterung (24) drehbar montiert sind.

4. Lenkrolle nach Anspruch 3, wobei die Vorbelastungseinrichtung eine Feder (32) aufweist, die sich in einer Aussparung (34) im Körper (12) befindet und durch ihre Anordnung bedingt verursacht, daß die Vorbelastungskraft auf einen Abschnitt (36) der Welle (20) wirkt, der sich in der Wellenhalterung (24) befindet.

5. Lenkrolle nach Anspruch 3 oder 4, wobei die Bremseinrichtung eine jeweilige radial nach außen zeigende Flächeneinrichtung (38) aufweist, die angeordnet ist, um mit einer radial nach innen zeigenden Umfangsfläche (40) jedes Rades (14) in Reibungseingriff zu stehen.

6. Lenkrolle nach Anspruch 5, wobei die Flächeneinrichtung (38) jeder Bremseinrichtung und die Umfangsfläche (40) jedes Rades in einer solchen Weise angeordnet sind, daß bei in der Durchgangsöffnung (22) montierter Welle, wenn die Räder an den jeweiligen Endabschnitten (19) der Welle (20) montiert werden, die Eingriffsbewegung der Umfangsflächen (40) mit den Flächeneinrichtungen (38) verursacht, daß sich die Welle (22) in bezug auf den Körper (12) nach oben bewegt, um ein Belasten der Vorbelastungseinrichtung (32) zu bewirken.

7. Lenkrolle nach Anspruch 5, wobei jede Bremseinrichtung einen sich neigenden freien Kantenabschnitt (50) hat, der sich benachbart zu ihrer Flächeneinrichtung (38) und axial außerhalb von dieser befindet, und jedes Rad einen sich neigenden freien, ringförmigen Kantenabschnitt (52) hat, der sich benachbart zur Umfangsfläche (40) an diesem und axial innerhalb von dieser befindet, so daß bei in der Durchgangsöffnung (22) montierter Welle, wenn die Räder (14) an den jeweiligen Endabschnitten (19) der Welle (20) montiert werden, die ringförmigen Kantenabschnitte (52) auf den Bremseinrichtung-Kantenabschnitten (50) radial aufsitzen, was verursacht, daß sich die Welle (20) in bezug auf den Körper (12) nach oben bewegt, um ein Belasten der Vorbelastungseinrichtung (32) zu bewirken, und die Umfangsflächen (40) mit den Flächeneinrichtungen (38) in Eingriff gelangen.

8. Lenkrolle nach Anspruch 5, wobei ein freier Kantenabschnitt (50) jeder der Bremseinrichtungen, der zu ihrer Flächeneinrichtung (38) benachbart ist und sich axial außerhalb von dieser befindet, geneigt ist, so daß bei in der Durchgangsöffnung (22) montierter Welle, wenn die Räder (14) an den jeweiligen Endabschnitten (19) der Welle (20) montiert werden, die Umfangsflächen (40) der Räder auf den Kantenabschnitten (50) in Eingriff mit den Flächeneinrichtungen (38) radial aufsitzen, was verursacht, daß sich die Welle (20) in bezug auf den Körper (12) nach oben bewegt, um ein Belasten der Vorbelastungseinrichtung (12) zu bewirken.

9. Lenkrolle nach Anspruch 5, wobei ein freier, ringförmiger Kantenabschnitt (52) jedes der Räder (14), der sich benachbart zur Umfangsfläche (40) an diesem und axial innerhalb von dieser befindet, geneigt ist, so daß bei in der Durchgangsöffnung (22) montierter Welle, wenn die Räder (14) an den jeweiligen Endabschnitten (19) der Welle (20) montiert werden, sich die Flächeneinrichtungen (38) der Bremseinrichtung unter die ringförmigen Kantenabschnitte (52) in Eingriff mit den Umfangsflächen (40) radial bewegen, was verursacht, daß sich die Welle (20) in bezug auf den Körper (12) nach oben bewegt, um ein Belasten der Vorbelastungseinrichtung (32) zu bewirken.

10. Verfahren zur Herstellung einer Lenkrolle, die aufweist: eine Radeinrichtung (14), die in bezug auf einen Körper (12) durch eine in einer Durchgangsöffnung (22) einer Wellenhalterung (24) des Körpers (12) montierten Welle (20) drehbar montiert ist, wobei die Durchgangsöffnung eine Aufwärts- und Abwärtsbewegung des Körpers in bezug auf die Welle gestattet, und eine Vorbelastungseinrichtung (32), die eine vorbestimmte Vorbelastungskraft vorsieht, die den Körper in bezug auf die Welle nach oben vorbelastet, so daß bei nicht vorhandener abwärtsgerichteter Last oberhalb eines vorbestimmten Betrages, die an den Körper angelegt ist, eine Bremseinrichtung (38) des Körpers (12) mit der Radeinrichtung (14) in Eingriff steht, um letztere zu bremsen,
wobei das Verfahren aufweist:
das Einführen der Vorbelastungseinrichtung (32) in eine Aussparung (34) des Körpers, damit diese in einem nicht belasteten Zustand in die Durchgangsöffnung (22) vorsteht, und
anschließend das axiale Einführen der Welle in die Durchgangsöffnung, so daß, wenn die Welle in der Durchgangsöffnung montiert ist, die Vorbelastungseinrichtung (32) auf einen Abschnitt der Welle wirkt, der sich in der Wellenhalterung (24) befindet, und den Körper in bezug auf die Welle nach oben vorbelastet,
**dadurch gekennzeichnet, daß**
beim Schritt des axialen Einführens der Welle in die Durchgangsöffnung ein konisches Ende (46A) der Welle mit einem freien Endabschnitt (48) der Vorbelastungseinrichtung, der in die Durchgangsöffnung vorsteht, in Eingriff gelangt, um ein Belasten der Vorbelastungseinrichtung zu bewirken.

11. Verfahren nach Anspruch 10, wobei die Radeinrichtung (14) an der Welle (20) montiert wird, wenn die Welle in der Öffnung (22) montiert ist, und der Schritt der Montage der Radeinrichtung an der Welle die Vorbelastungseinrichtung (32) belastet.

12. Verfahren nach Anspruch 11, wobei die Radeinrichtung zwei Räder (14) aufweist und der Schritt der Montage der Radeinrichtung an der Welle das gleichzeitige axiale Drücken der Räder (14) auf die jeweiligen Endabschnitte (19) der Welle an jeder Seite der Wellenhalterung (24) beinhaltet.

13. Verfahren nach Anspruch 12, wobei die Bremseinrichtung eine jeweilige radial nach außen zeigende Flächeneinrichtung (38) aufweist, die angeordnet ist, um mit einer radial nach innen zeigenden Umfangsfläche (40) jedes Rades (14) in Reibungseingriff zu stehen, und die Flächeneinrichtung (38) jeder Bremseinrichtung und die Umfangsfläche (40) jedes Rades in einer solchen Weise angeordnet sind, daß während des Schritt des axialen Drückens der Räder auf die jeweiligen Endabschnitte (19) der Welle (20) die Eingriffsbewegung der Umfangsflächen (40) mit den Flächeneinrichtungen (38) verursacht, daß sich die Welle (22) in bezug auf den Körper (12) nach oben bewegt, um das weitere Belasten der Vorbelastungseinrichtung (32) zu bewirken.

14. Verfahren nach Anspruch 12, wobei die Bremseinrichtung eine jeweilige radial nach außen zeigende Flächeneinrichtung (38) aufweist, die angeordnet ist, um mit eine radial nach innen zeigenden Umfangsfläche (40) jedes Rades (14) in Reibungseingriff zu stehen, und wobei jede Bremseinrichtung einen sich neigenden freien Kantenabschnitt (50) hat, der sich benachbart zu ihrer Flächeneinrichtung (38) und axial außerhalb von dieser befindet, und jedes Rad einen sich neigenden freien, ringförmigen Kantenabschnitt (52) hat, der sich benachbart zur Umfangsfläche (40) an diesem und axial innerhalb von dieser befindet, so daß während des Schritts des axialen Drückens der Räder (14) auf die jeweiligen Endabschnitte (19) der Welle (20) die ringförmigen Kantenabschnitte (52) auf den Bremseinrichtung-Kantenabschnitten (50) radial aufsitzen, was verursacht, daß sich die Welle (20) in bezug auf den Körper (12) nach oben bewegt, um das weitere Belasten der Vorbelastungseinrichtung (32) zu bewirken, und die Umfangsflächen (40) mit den Flächeneinrichtungen (38) in Eingriff gelangen.

15. Verfahren nach Anspruch 12, wobei die Bremseinrichtung eine jeweilige radial nach außen zeigende Flächeneinrichtung (38) aufweist, die angeordnet ist, um mit einer radial nach innen zeigenden Umfangsfläche (40) jedes Rades (14) in Reibungseingriff zu stehen, und ein freier Kantenabschnitt (50) jeder Bremseinrichtung, der benachbart zu ihrer Flächeneinrichtung (38) und axial außerhalb von dieser angeordnet ist, geneigt ist, so daß während des Schritts des axialen Drückens der Räder (14) auf die jeweiligen Endabschnitte (19) der Welle (20) die Umfangsflächen (40) der Räder auf den Kantenabschnitten (50) in Eingriff mit den Flächeneinrichtungen (38) radial aufsitzen, was verursacht, daß sich die Welle (20) in bezug auf den Körper (12) nach oben bewegt, um das weitere Belasten der Vorbelastungseinrichtung (32) zu bewirken.

16. Verfahren nach Anspruch 12, wobei die Bremseinrichtung eine jeweilige radial nach außen zeigende Flächeneinrichtung (38) aufweist, die angeordnet ist, um mit einer radial nach innen zeigenden Umfangsfläche (40) jedes Rades (14) in Reibungseingriff zu stehen, und ein freier ringförmiger Kantenabschnitt (52) jedes der Räder (14), der benachbart zu seiner Umfangsfläche (40) an diesem und axial innerhalb von dieser angeordnet ist, sich neigt, so daß während des Schritts des axialen Drückens der Räder (14) auf die jeweiligen Endabschnitte (19) der Welle (20) sich die Flächeneinrichtungen (38) der Bremseinrichtung unter die ringförmigen Kantenabschnitte (52) in Eingriff mit den Umfangsflächen (40) radial bewegen, was verursacht, daß sich die Welle (20) in bezug auf den Körper (12) nach oben bewegt, um das weitere Belasten der Vorbelastungseinrichtung (32) zu bewirken.

## Revendications

1. Roulette comprenant un moyen de roulement (14) monté à rotation par rapport à un corps (12) à l'aide d'un axe (20) qui est monté dans un passage traversant (22) d'un support d'axe (24) du corps (12), ledit passage traversant permettant un déplacement du corps vers le haut et vers le bas par rapport à l'axe, et un moyen de sollicitation (32) fournissant une force de sollicitation prédéterminée sollicitant ledit corps vers le haut par rapport à l'axe, de telle sorte qu'un moyen de freinage (38) du corps (12) vienne en prise avec ledit moyen de roulement (14) pour freiner ce dernier lorsqu'aucune charge dirigée vers le bas supérieure à une grandeur prédéterminée n'est appliquée sur le corps, caractérisée en ce que l'axe (20) possède une extrémité conique (46A) venant en prise avec une partie d'extrémité libre (48) dudit moyen de sollicitation (32) qui fait saillie dans ledit passage traversant, pendant l'insertion axiale dudit axe (20) dans ledit passage traversant (22), afin d'effectuer une mise en charge dudit moyen de sollicitation (32).

2. Roulette selon la revendication 1, dans laquelle le moyen de roulement (14) coopère avec le corps (12) de telle sorte que le montage du moyen de roulement (14) sur l'axe (20) lorsque celui-ci est monté dans ledit passage (22) charge davantage ledit moyen de sollicitation (32).

3. Roulette selon la revendication 1 ou 2, dans laquelle ledit passage dans lequel ledit axe est monté est un passage traversant (22) d'un support d'axe (24) du corps (12), et ledit moyen de roulement comprend deux roues (14) montées à rotation sur des parties d'extrémité respectives (19) de l'axe, de chaque côté du support d'axe (24).

4. Roulette selon la revendication 3, dans laquelle ledit moyen de sollicitation comprend un ressort (32) situé à l'intérieur d'une cavité (34) ménagée dans ledit corps (12) et disposé de manière à contraindre ladite force de sollicitation à agir sur une partie (36) dudit axe (20) située à l'intérieur dudit support d'axe (24).

5. Roulette selon la revendication 3 ou 4, dans laquelle ledit moyen de freinage comprend des moyens formant des surfaces (38) tournées radialement vers l'extérieur et disposées pour venir respectivement en prise avec une surface circonférentielle (40) de chacune desdites roues (14) qui est tournée radialement vers l'intérieur.

6. Roulette selon la revendication 5, dans laquelle lesdits moyens formant des surfaces (38) de chacun desdits moyens de freinage et ladite surface circonférentielle (40) de chacune desdites roues sont disposés de telle sorte que lors du montage desdites roues sur les portions d'extrémité respectives (19) de l'axe (20) lorsque celui-ci est monté dans le passage traversant (22), le déplacement desdites surfaces circonférentielles (40) pour les mettre en prise avec les moyens formant des surfaces (38) oblige ledit axe (22) à se déplacer vers le haut par rapport audit corps (12) pour effectuer une mise en charge dudit moyen de sollicitation (32).

7. Roulette selon la revendication 5, dans laquelle chacun desdits moyens de freinage comporte une partie de bord libre inclinée (50), adjacente à son moyen formant une surface (38) et axialement à l'extérieur de celui-ci, et chacune desdites roues possède une partie de bord libre annulaire inclinée (52), adjacente à ladite surface de circonférence (40) située sur elle et axialement à l'intérieur de ladite surface de circonférence (40), de telle sorte que lors du montage desdites roues (14) sur les parties d'extrémité respectives (19) de l'axe (20) lorsque celui-ci est monté dans le passage traversant (22), lesdites parties de bord annulaires (52) s'étendent radialement au-dessus desdites parties de bord (50) desdits moyens de freinage, obligeant ledit axe (20) à se déplacer vers le haut par rapport audit corps (12), pour effectuer la mise en charge dudit moyen de sollicitation (32), et lesdites surfaces circonférentielles (40) viennent en prise avec lesdits moyens formant des surfaces (38).

8. Roulette selon la revendication 5, dans laquelle une partie de bord libre (50) de chacun desdits moyens de freinage, adjacente à son moyen formant une surface (38) et axialement à l'extérieur de celui-ci, est inclinée de telle sorte que lors du montage desdites roues (14) sur les parties d'extrémité respectives (19) de l'axe (20) lorsque celui-ci est monté dans le passage traversant (22), lesdites surfaces circonférentielles (40) des roues s'étendent radialement au-dessus desdites parties de bord (50) pour venir en prise avec lesdits moyens formant des surfaces (38), obligeant ledit axe (20) à se déplacer vers le haut par rapport audit corps (12) pour effectuer une mise en charge dudit moyen de sollicitation (32).

9. Roulette selon la revendication 5, dans laquelle une partie de bord annulaire libre (52) de chacune desdites roues (14), adjacente à sa surface circonférentielle (40) et axialement à l'intérieur de celle-ci, est inclinée de telle sorte que lors du montage desdites roues (14) sur les parties d'extrémité respectives (19) de l'axe (20) lorsque celui-ci est monté dans le passage traversant (22), lesdits moyens formant des surfaces (38) desdits moyens de freinage s'étendent radialement sous lesdites parties de bord annulaires (52) pour venir en prise avec lesdites surfaces circonférentielles (40), obligeant ledit axe (20) à se déplacer vers le haut par rapport audit corps (12), pour effectuer une mise en charge dudit moyen de sollicitation (32).

10. Méthode de fabrication d'une roulette comprenant un moyen de roulement (14) monté à rotation par rapport à un corps (12) à l'aide d'un axe (20) monté dans un passage traversant (22) d'un support d'axe (24) du corps (12), ledit passage traversant permettant un déplacement du corps vers le haut et vers le bas par rapport à l'axe, et un moyen de sollicitation (32) fournissant une force de sollicitation prédéterminée sollicitant ledit corps vers le haut par rapport à l'axe, de telle sorte qu'un moyen de freinage (38) du corps (12) vienne en prise avec ledit moyen de roulement (14) pour freiner ce dernier lorsqu'aucune charge dirigée vers le bas supérieure à une grandeur prédéterminée n'est appliquée sur le corps, ladite méthode comprenant l'insertion du moyen de sollicitation (32) à l'intérieur d'une cavité (34) du corps de telle sorte qu'il fasse saillie, dans un état non chargé, dans le passage traversant (22), puis l'insertion axiale dudit axe dans ledit passage traversant de telle sorte que lorsque ledit axe est monté dans ledit passage traversant, ledit moyen de sollicitation (32) agisse sur une partie dudit axe située à l'intérieur du support d'axe (24) et sollicite le corps vers le haut par rapport audit axe, caractérisée en ce que lors de l'étape d'insertion axiale dudit axe à l'intérieur dudit passage traversant, une extrémité conique (46A) dudit axe vient en prise avec une partie d'extrémité libre (48) dudit moyen de sollicitation, qui fait saillie dans ledit passage traversant pour effectuer une mise en charge dudit moyen de sollicitation.

11. Méthode selon la revendication 10, dans laquelle le moyen de roulement (14) est monté sur l'axe (20) lorsque celui-ci est monté dans ledit passage (22), et l'étape de montage desdits moyens de roulement sur l'axe charge ledit moyen de sollicitation (32).

12. Méthode selon la revendication 11, dans laquelle ledit moyen de roulement comprend deux roues (14) et ladite étape de montage du moyen de roulement sur l'axe comprend la poussée simultanée des roues (14) axialement sur les parties d'extrémité respectives (19) de l'axe, de chaque côté du support d'axe (24).

13. Méthode selon la revendication 12, dans laquelle ledit moyen de freinage comprend des moyens formant des surfaces (38) tournées radialement vers l'extérieur et disposées pour venir respectivement en prise par frottement avec une surface circonférentielle (40), tournée radialement vers l'intérieur, de chacune desdites roues (14), et lesdits moyens formant des surfaces (38) dudit moyen de freinage et ladite surface circonférentielle (40) de chacune desdites roues sont disposés de telle sorte que pendant l'étape de poussée axiale des roues sur les parties d'extrémité respectives (19) de l'axe (20), un déplacement desdites surfaces circonférentielles (40) pour les mettre en prise avec lesdits moyens formant des surfaces (38) oblige ledit axe (20) à se déplacer vers le haut par rapport au dit corps (12) pour effectuer une mise en charge supplémentaire dudit moyen de sollicitation (32).

14. Méthode selon la revendication 12, dans laquelle ledit moyen de freinage comprend des moyens formant des surfaces (38) tournées radialement vers l'extérieur et disposées pour venir respectivement en prise par frottement avec une surface circonférentielle (40), tournée radialement vers l'intérieur, de chacune des roues (14), et dans laquelle chacun des moyens de freinage comporte une partie de bord libre inclinée (50) adjacente à son moyen formant une surface (38) et axialement à l'extérieur de celui-ci, et chacune desdites roues comporte une partie de bord annulaire libre inclinée (52) adjacente à sa surface circonférentielle (40) et axialement à l'intérieur de celle-ci, de telle sorte que pendant l'étape de poussée axiale des roues (14) sur les parties d'extrémité respectives (19) de l'axe (20), lesdites parties de bord annulaires (52) s'étendent radialement au-dessus desdites parties de bord (50) des moyens de freinage, obligeant ledit axe (20) à se déplacer vers le haut par rapport audit corps (12) pour effectuer une mise en charge supplémentaire dudit moyen de sollicitation (32), et lesdites surfaces circonférentielles (40) viennent en prise avec lesdits moyens formant des surfaces (38).

15. Méthode selon la revendication 12, dans laquelle ledit moyen de freinage comprend des moyens formant des surfaces (38) tournées radialement vers l'extérieur et disposées pour venir respectivement en prise par frottement avec une surface circonférentielle tournée radialement vers l'intérieur (40) de chaque roue (14), et une portion de bord libre (50) de chacun des moyens de freinage, adjacente à son moyen formant une surface (38) et radialement à l'extérieur de celui-ci, est inclinée de telle sorte que pendant ladite étape de poussée axiale des roues (14) sur les parties d'extrémité respectives (19) de l'axe (20), lesdites surfaces circonférentielles (40) des roues s'étendent radialement au-dessus desdites parties de bord (50) pour venir en prise avec lesdits moyens formant des surfaces (38), obligeant ledit axe (20) à se déplacer vers le haut par rapport audit corps (12), pour effectuer une mise en charge supplémentaire dudit moyen de sollicitation (32).

16. Méthode selon la revendication 12, dans laquelle ledit moyen de freinage comprend des moyens formant des surfaces (38) tournées radialement vers l'extérieur et disposées pour venir respectivement en prise par frottement avec une surface circonférentielle (40), tournée radialement vers l'intérieur, de chacune desdites roues (14), et une partie de bord annulaire libre (52) de chacune desdites roues (14), adjacente à sa surface circonférentielle (40) et axialement à l'intérieur de celle-ci, est inclinée de telle sorte que lors de l'étape de poussée axiale des roues (14) sur les parties d'extrémité respectives (19) de l'axe (20), lesdits moyens formant des surfaces (38) dudit moyen de freinage s'étendent radialement sous lesdites parties de bord annulaires (52) pour venir en contact avec lesdites surfaces circonférentielles (40), obligeant ledit axe (20) à se déplacer vers le haut par rapport audit corps (12) pour effectuer une mise en charge supplémentaire dudit moyen de sollicitation (32).
